# EUROPEAN PATENT APPLICATION

(11) **EP 1 529 593 A1**
(43) Date of publication of application: **11.05.2005**
(21) Application number: 04024113.5
(22) Date of filing: 08.10.2004
(51) Int. Cl.: B23K 26/26, B23K 26/42, B23K 37/04, B23K 26/38, B23Q 3/00

(54) **Method for producing large metal sheets by laser welding in association with pressure rollers and worktable with means for moving closer two worktable parts**

(30) Priority: 07.11.2003 FI 20031621
(71) Applicant: Oy Mizar Ab, 23500 Uusikaupunki (FI)
(72) Inventor: Liski, Marko, 23200 Vinkkilä (FI); Maaranen, Ilpo, 21500 Piikkio (FI); Held, Jürgen, 63065 Offenbach/Main (DE)
(74) Representative: Zipse & Habersack

(57) **Abstract**

A precision production method is used for producing large metal sheets by welding together smaller sheet blanks (2a,2b). A worktable (1) is used for supporting and holding the sheet blanks (2a,2b). During the time of the production process, two sheet blanks (2a,2b) are immovably attached to the worktable (1) in a position with two border areas close to one another. Each sheet blank (2a,2b) is attached to its own part (1a,1b) of the worktable, between which parts (1a,1b) there is a gap (3) at the position of said border areas. Thereafter, in case said border areas do not fit together with sufficient accuracy, a cutting of the border areas of both sheet blanks (2a,2b) is performed at the position of said gap (3), either as a joint cut through two overlapping border areas or as separate cuts through each of said border areas. Thereafter said sheet blank borders are placed against one another to form a close fit. If this requires movement of the sheet blanks (2a,2b), the movement is obtained by moving said parts (1a,1b) of the worktable closer to one another. Finally, joining said sheet blank borders to one another by welding is performed by using, in the immediate vicinity of the welding area, pressure rolls or the like sheet blank loading units pressing said sheet blanks (2a,2b) firmly against the worktable (1).

## Description

The invention relates to a production method according to the preamble of claim 1 and to a worktable intended for the application of the method in question and to a combination of a worktable and laser welding means.

The production of large metal sheets from smaller sheet blanks by welding causes difficulties, when high precision must be obtained in plane accuracy, form, dimensions and lack of internal tensions in the final product. Typically, high precision demands must be met in the production of so called surface plates for cellular sandwich structures. In this specification, cellular sandwich structure means the type of metal structure explained in detail in European patent applications EP 03022602.1 and EP 03022565.0. This type of cellular sandwich structure is extremely advantageous as to its strength properties. It makes it possible to minimize the amount of material needed for obtaining a certain structural strength. The production of a cellular sandwich structure is, however, relatively complicated and unconditionally requires a high degree of precision also in the production of the plane surface plates for such a structure.

The object of the invention is to provide a new precision production method, by means of which it is possible to produce, on an industrial scale, large metal sheets from smaller sheet blanks. The invention is generally applicable to the production of large metal sheets either from separate sheet blanks or from a continuous metal sheet unwinded from a reel. In particular, the invention is applicable to the production of surface plates for large cellular sandwich structures. The object of the invention is obtained in the manner stated in claim 1.

The invention is based on the idea, that inaccuracy should not be allowed to occur in the production process as a result of position shifting of work pieces. Therefore, the sheet blanks needed for the production, in the initial phase two sheet blanks, are, during the whole time of the production process of joining them together, rigidly attached to a worktable in such a manner, that below adjacent border areas of the sheet blanks, there is a gap. This gap has its significance in a cutting or edge-trimming phase of the sheet blanks, as well as in joining the sheet blanks by welding.

The invention also provides the benefit, that clamping of the work pieces is reduced to a minimum. In the edge-trimming phase, the sheet blanks do not have to undergo heavy clamping to the worktable. It is sufficient, that they are securely attached, which can be obtained by light attachment means, such as vacuum attachment. In the welding phase, clamping is necessary, but in this phase the clamping means may be integrated in the welding apparatus. This makes the production streamlined and avoids unnecessary and time-consuming preparations.

Conventional metal sheets do not normally have faultless rectilinear borders. Therefore, such sheets must have their borders cut rectilinearly with a high degree of accuracy. By special order it is possible to get sheets having their borders pre-cut with great accuracy. In that case, no cutting is needed in the production process according to the invention.

If the borders of the sheet blanks have to be cut, this may take place by placing the border areas of the blanks in an overlapping position and making a single cut through both blanks. Alternatively, the border area of each blank is cut separately. In both cases, the cut is made at the position of the worktable gap.

If the borders of the sheet blanks are cut separately, the blanks must, in the following phase, be moved towards one another until they are accurately either in contact with one another or so close to one another, that the welding phase of the production process may be carried out without further adjustment of the positions of the blanks. For carrying out this movement of the blanks, they are each connected to a separate part of the worktable. Without disengaging the attachment of the blanks to their respective worktable part, the two parts of the worktable are moved closer to one another. This movement requires precision guide means, known *per se,* ensuring that the adjustment of the position of the blanks takes part strictly in parallel, that is, without any change in the angular position of the blanks relative one another. The movement may be accomplished by moving only one of the worktable parts and keeping the other part stationary, or by moving both worktable parts. By not disconnecting the blanks from the worktable, the blanks maintain their position with their cut edges perfectly in parallel and their position adjustment is easy to perform. Worktables including two parts movable relatively one another with great accuracy, are known art.

If the borders of the sheet blanks have been cut at the same time in one cut through both blanks, the position of the blanks may be satisfactory already as a result of the cutting operation. In that case, there is possibly no need at all for moving the blanks, or only a very short movement is required.

In a final stage, the cut borders of the sheet blanks are welded together. Thereby, pressure rolls or the like sheet loading units are used for pressing the sheet blanks against the worktable in the immediate vicinity of the welding area. By pressing the blanks with a great force against the worktable at both sides of the welding area a better welding result is obtained and it is ensured that the sheet blanks remain flat with great accuracy. The welding is performed at the position of the worktable gap.

The sheet blanks may with advantage be attached to the worktable by means of vacuum attachment. Vacuum attachment is favourable as to the costs and is reliable. It can be used for all kinds of sheet and the attachment arrangement may easily be modified and adapted to suit sheets of different size. In case the sheet material is magnetic, one may also with advantage use magnetic attachment.

The cutting of the border areas of the sheet blanks is preferably performed rectilinearly by using precision controlling means and also strictly in parallel, in case the border areas are cut separately. Even if other cutting forms than rectilinear are feasible, rectilinear cutting is in practice the most favourable and most easy to handle.

For welding processes demanding a high degree of accuracy, laser welding is superior. Hence, it is recommended, that the welding together of the sheet blanks be performed by using a laser welding equipment. Laser welding may be performed by adding welding material or without adding material. Welding without adding material is recommended, in case the sheet blanks are substantially in contact with one another at the weld position. If there is a gap between the sheets at the weld position, which gap may be about 0.5 mm at the most, it is advisable to use laser welding, in which welding material is added.

The invention also relates to a worktable for precision production of large sheets from smaller sheet blanks. The worktable is designed to be suitable for the application of the production method of the invention. It should comprise means for reliable attachment of sheet blanks to the worktable and a slot, a gap or the like below the area intended for the cutting and welding together of sheet blanks and means for moving, in parallel, closer to one another the parts of the worktable that are carrying the sheet blanks. The slot, gap or the like may with advantage be provided with means for removing border strips cut from the sheet blanks. The border strips may simply fall down through the gap, or, one may use border strip moving means working in a longitudinal direction of the gap.

The invention also relates to a combination of a worktable and laser welding means for welding together sheet blanks, which combination also is designed to be suitable for the application of the production method of the invention. This presupposes, that the laser welding means comprises, in the immediate vicinity of the welding area, pressure rolls or the like sheet blank loading means pressing the sheet blanks against the worktable.

It is recommended to use at least two pressure rolls or the like loading units arranged in pairs to load the sheet blanks at both sides of the welding area. By this means sufficiently strong load acting on the sheet blanks is obtained in a simple way, which reduces the amount of remaining internal sheet tensions close to the weld seam.

Particularly advantageous is an embodiment, in which the sheet blank loading units are bevelled wheels having their axes of rotation in such an angle to the level of the worktable, that the bevel circumference of the wheels, at its area of contact with a sheet blank, is substantially level with the worktable and takes a position close to the welding area. By arranging the axes of the loading wheels obliquely, it is possible to use a robust arrangement for producing high sheet loading forces, but nevertheless the load can be brought very close to the welding area. The diameter, width, hardness and rounding off radii of the pressure rolls should be so chosen that the load of the pressure rolls does not produce visible traces on the sheet blanks. By this means a result is obtained that is favourable technically as well as to its appearance.

In the following, some embodiments of the invention are described more in detail, with reference to the attached schematic drawings, in which
- Fig. 1 shows, in section, simultaneous cutting of the border areas of two sheet blanks,
- Fig. 2 shows, in side view, separate cutting of the border areas of two sheet blanks,
- Fig. 3 shows, in side view, a combination of a worktable and a laser welding means for welding together sheet blanks.

In the drawings, 1 indicates a robust worktable and 1a and 1b indicate parts of the worktable movable towards one another. Two sheet blanks 2a and 2b are attached to the worktable parts 1a and 1b, respectively. Below adjacent border areas of the sheet blanks, there is a gap 3 in the worktable. For securing the sheet blanks in position, the worktable has a great number of suction apertures 4, which advantageously are in groups connected through ducts 5 to one or several suction apparatuses 6, such as a vacuum pump or the like. It is recommended to have 20 to 200 suction apertures per square meter of the worktable. Thin sheet blanks require a tighter pattern of suction apertures than thicker sheet blanks. Suction apertures that are not covered by a sheet, may be disconnected from the suction apparatus 6, or they may be sealed with rubber plugs or the like.

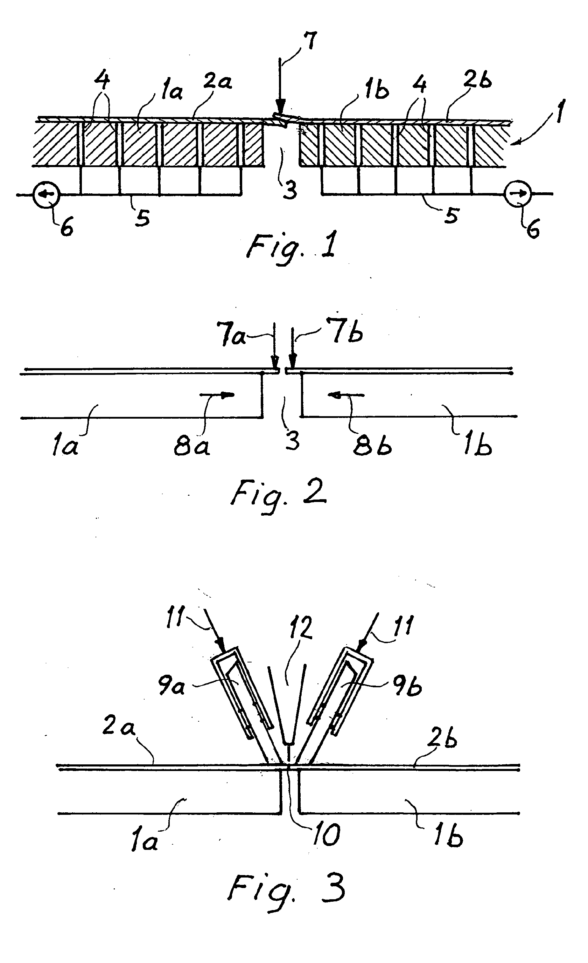

In Fig. 1, the sheet blanks 2a and 2b are arranged partly overlapping. Their borders are cut rectilinearly in one cut trough both blanks. The cleanest cut is obtained by using a laser cutting means, schematically shown in the Figure as an arrow 7. The border strips cut from the sheet blanks fall down through the gap 3. The border strips may also by a suitable arrangement be removed in a longitudinal direction of the gap 3.

Fig. 2 shows separate cutting of the sheet blanks. The worktable arrangement is the same as in Fig. 1, but the worktable is now shown in side view. This cutting may require that the gap 3 of the worktable is broader than in Fig. 1. The cut is performed by means of laser cutting equipment in two strictly parallel cuts. The laser cutting means are indicated in the form of arrows 7a and 7b. After the cutting operation, the parts 1a and 1b of the worktable are moved towards one another, as shown by arrows 8a and 8b. It is normally sufficient, that only one of the worktable parts is moved.

Fig. 3 shows joining the sheet blanks 2a and 2b by welding. Thereby, loading wheels 9a and 9b are used, which, at both sides of the welding area 10, press the sheet blanks 2a and 2b firmly against the worktable parts 1a and 1b, respectively. Arrows 11 show the load forces of the loading wheels. Because a laser welding equipment 12 requires relatively much lateral space, difficulties occur in applying the load of the loading wheels close to the welding area.

By using bevelled wheels, as shown in Fig. 3, the load area of the loading wheels can be brought very close to the welding area 10. The obliquely to the plane of the worktable directed load also produces a load component forcing the sheet blanks towards one another, which is favourable for the welding operation.

It is recommended to use relatively big loading wheels. A diameter of 50 to 400 mm is recommended for sheet blanks of a thickness of 1 to 8 mm. The hardness, width, loading force, rounding off radii etc. of the loading wheels are so chosen, that their load does not produce visible traces on the sheet blanks.

The invention is not limited to the embodiments shown, but several modifications of the invention are feasible within the scope of the attached claims.

## Claims

1. A precision production method for producing large metal sheets by welding together smaller sheet blanks, in which method a worktable is used for supporting and holding the sheet blanks, **characterised in that**, during the time of the production process, at least two sheet blanks (2a, 2b) are immovably attached to the worktable (1) in a position with two border areas close to one another, whereby each sheet blank is attached to its own part (1a, 1b) of the worktable, between which parts (1a, 1b) there is a gap (3) at the position of said border areas, **in that**, in the next step, in case said border areas do not fit together with sufficient accuracy, a cutting of said border areas is performed at the position of said gap (3), which cutting is performed either as a joint cut through two overlapping border areas or as separate cuts through each of said border areas, **in that** thereafter the finalized sheet blank borders are placed against one another to form as close a fit as required by the welding procedure, which, if required, is obtained by moving said parts (1a, 1b) of the worktable closer to one another, and **in that** finally, joining said sheet blank borders to one another by welding takes part at the position of said gap (3) and is performed by using, in the immediate vicinity of the welding area, pressure rolls (9a, 9b) or the like sheet blank loading units pressing said sheet blanks firmly against the worktable (1).

2. A method according to claim 1, **characterised in that** the attachment of the sheet blanks (2a, 2b) to the worktable (1) is performed by using vacuum attachment means (4, 5, 6).

3. A method according to claim 1 or 2, **characterised in that** the cutting (7) of the border areas of the sheet blanks (2a, 2b) is performed rectilinearly by using precision controlling means and also in parallel, in case the border areas are cut separately.

4. A method according to any of the preceding claims, **characterised in that** joining the sheet blanks (2a, 2b) to one another by welding is performed by using laser welding means (12) and preferably without adding welding material.

5. A worktable for precision production of large sheets by welding together smaller sheet blanks, **characterised in that** the worktable (1) comprises means (4, 5, 6) for immovable attachment of the sheet blanks (2a, 2b) to the worktable (1) and a slot, a gap (3) or the like below the area intended for cutting and welding together of sheet blanks and means for moving closer to one another such parts (1a, 1b) of the worktable that are carrying separate sheet blanks.

6. A worktable according to claim 5, **characterised in that**, in the slot, gap (3) or the like, means for removing border strips cut from the sheet blanks (2a, 2b) are arranged.

7. A combination of a worktable according to claim 5 or 6 and a laser welding means for welding together sheet blanks, **characterised in that** the laser welding means comprises, in the immediate vicinity of the welding area (10), pressure rolls (9a, 9b) or the like sheet blank loading units pressing the sheet blanks (2a, 2b) firmly against the worktable (1).

8. A combination according to claim 7, **characterised in that** there are at least two pressure rolls (9a, 9b) or the like, which are arranged in pairs to load the sheet blanks (2a, 2b) at both sides of the welding area (10).

9. A combination according to claim 7 or 8, **characterised in that** the sheet blank loading units are bevelled wheels (9a, 9b) having their axes of rotation in such an angle to the level of the worktable, that the bevel circumference of the wheels, at its area of contact with a sheet blank, is substantially level with the worktable and takes a position close to the welding area (10).

10. A combination according to any of the claims 7 to 9, **characterised in that** the diameter, width, hardness and rounding off radii of the pressure rolls (9a, 9b) are so chosen, that the load exerted by the pressure rolls on the sheet blanks (2a, 2b) does not produce visible traces on the sheet blanks (2a, 2b).
